(19) **Europäisches Patentamt / European Patent Office / Office européen des brevets**

(11) **EP 4 595 019 B1**

(12) **EUROPÄISCHE PATENTSCHRIFT**

(45) Veröffentlichungstag und Bekanntmachung des Hinweises auf die Patenterteilung:
**10.06.2026   Patentblatt 2026/24**

(21) Anmeldenummer: **23768869.2**

(22) Anmeldetag: **12.09.2023**

(51) Internationale Patentklassifikation (IPC):
**G06V 10/82** *(2022.01)*      **G06V 20/56** *(2022.01)*

(52) Gemeinsame Patentklassifikation (CPC):
**G06V 10/82; G06V 20/56**

(86) Internationale Anmeldenummer:
**PCT/EP2023/074993**

(87) Internationale Veröffentlichungsnummer:
**WO 2024/068259 (04.04.2024 Gazette 2024/14)**

(54) **VERFAHREN ZUR OBJEKTDETEKTION AUS PUNKTWOLKEN-DATEN MITTELS EINES TRANSFORMERS MIT ATTENTION-MODELL**

METHOD FOR OBJECT DETECTION FROM POINT CLOUD DATA USING A TRANSFORMER WITH ATTENTION MODEL

MÉTHODE DE DÉTECTION D'OBJETS À PARTIR DE DONNÉES DE NUAGES DE POINTS À L'AIDE D'UN TRANSFORMATEUR AVEC MODÈLE D'ATTENTION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.09.2022   DE 102022210248**

(43) Veröffentlichungstag der Anmeldung:
**06.08.2025   Patentblatt 2025/32**

(73) Patentinhaber: **Robert Bosch GmbH**
**70442 Stuttgart (DE)**

(72) Erfinder:
• **FAION, Florian**
**79219 Staufen (DE)**
• **RUPPEL, Felicia**
**71272 Renningen (DE)**

(56) Entgegenhaltungen:
• **JIAYAO SHAN ET AL: "Real-time 3D Single Object Tracking with Transformer", ARXIV.ORG, CORNELL UNIVERSITY LIBRARY, 201 OLIN LIBRARY CORNELL UNIVERSITY ITHACA, NY 14853, 2 September 2022 (2022-09-02), XP091308682, DOI: 10.1109/TMM.2022.3146714**

• **ZHOU CHANGQING ET AL: "PTTR: Relational 3D Point Cloud Object Tracking with Transformer", 2022 IEEE/CVF CONFERENCE ON COMPUTER VISION AND PATTERN RECOGNITION (CVPR), IEEE, 18 June 2022 (2022-06-18), pages 8521 - 8530, XP034193303, DOI: 10.1109/ CVPR52688.2022.00834**

• **YUBO CUI ET AL: "3D Object Tracking with Transformer", ARXIV.ORG, CORNELL UNIVERSITY LIBRARY, 201 OLIN LIBRARY CORNELL UNIVERSITY ITHACA, NY 14853, 28 October 2021 (2021-10-28), XP091081914**

• **DENING LU ET AL: "Transformers in 3D Point Clouds: A Survey", ARXIV.ORG, CORNELL UNIVERSITY LIBRARY, 201 OLIN LIBRARY CORNELL UNIVERSITY ITHACA, NY 14853, 16 May 2022 (2022-05-16), XP091226702**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Detektion von mehreren Objekten aus Punktwolken-Daten mittels eines Transformers mit Attention-Modell.

Stand der Technik

Bei bildgebenden Sensoren wird heutzutage Objektdetektion durchgeführt. In der aufgenommenen Umgebung befinden sich typischerweise mehrere Objekte, sodass eine Detektion von mehreren Objekten durchgeführt wird. Beispielsweise wird Objektdetektion bei Sensoren für Fahrzeuge eingesetzt, um andere Fahrzeuge, andere Verkehrsteilnehmer und die Infrastruktur zu erfassen. Diese Daten können für (teil-)automatisiertes oder autonomes Fahren verwendet werden.

Neuerdings wird das Konzept verfolgt, Transformer für die Objektdetektion anzuwenden. Transformer werden in dem Paper Ashish Vaswani et al, "Attention is all you need", arXiv preprint arXiv:1706.03762, 2017 beschrieben, zunächst im Kontext von Sprachverarbeitung. Bei der Objektdetektion werden aus einer Messung für jedes Objekt Bounding-Boxen und deren Box-Parameter, die das Objekt beschreiben, also z. B. dessen Position, Ausmaße, Orientierung, Geschwindigkeit und/oder Klassenidentifikator, ermittelt. Die Transformer können auch für nachgelagerte Anwendungen wie beispielsweise Objektverfolgung, Prädiktion oder (Pfad-)Planung verwendet werden. Bei Verwendung von Transformern zur Objektdetektion kann die herkömmlicherweise in der Nachverarbeitung angewendete Unterdrückung von überlappenden Detektionen vernachlässigt werden. Bisher wurden solche Transformer beispielsweise auf Bilddaten angewendet. Der Einsatz auf großen Punktwolken, wie sie beispielsweise im Kontext von autonomem und automatisiertem Fahren vorkommen, ist bekannt aus Dokument JIAYAO SHAN ET AL: "Real-time 3D Single Object Tracking with Transformer", ARXIV.ORG, CORNELL UNIVERSITY LIBRARY, (2022-09-02) DOI: 10.1109/TMM.2022.3146714.

Offenbarung der Erfindung

Die Erfindung betrifft ein Verfahren zur Detektion von mehreren Objekten aus Punktwolken-Daten mittels eines Transformers mit Attention-Modell. Die Punktwolken-Daten werden beispielsweise durch ein LiDAR erfasst. Allerdings ist dieses Verfahren nicht auf LiDAR beschränkt, sondern es können auch andere Sensortypen verwendet werden. Bevorzugt ist der Sensor bzw. das Sensorsystem an einem Fahrzeug angeordnet, sodass die Punktwolken-Daten aus dem Fahrzeug aufgenommen werden.

Das Verfahren umfasst die folgenden Schritte: Zu Beginn werden Feature-Vektoren aus den Punktwolken-Daten berechnet. Dies wird nicht wie üblich von dem Encoder des Transformers durchgeführt, sondern durch ein Backbone. Ein Backbone ist ein neuronales Netz, das dafür verwendet wird, aus gemessenen Daten Features zu extrahieren, bzw. den Input in eine gewisse Feature-Repräsentation zu bringen, die dann weiterverarbeitet werden kann. Somit kann auf den Encoder des Transformers verzichtet werden. Vorzugsweise wird die Ausgabe des Backbones umformatiert, um eine Folge von Feature-Vektoren mit einer vorgebbaren Länge zu erhalten. Durch die Verwendung des Backbones zur Berechnung der Feature-Vektoren ist die Eingabesequenz bei der Self-Attention weniger limitiert als mit einem Encoder des Transformers und stattdessen kann bei einem gitterbasierten Backbone, wie PointPillars, eine ausreichend kleine Zellgröße gewählt werden. Die somit berechneten Feature-Vektoren werden dann dem Transformer zugeführt und dienen als Key-Vektoren und Value-Vektoren für die Ermittlung der Cross-Attention.

Zudem werden aus den Punktwolken-Daten durch eine Sampling-Methode wie beispielsweise Farthest-Point-Sampling (FPS) erste Anker-Positionen für eine erste Schicht des Transformers berechnet. Aus den ersten Anker-Positionen werden mittels Encoding, beispielsweise Fourier-Encoding, Feature-Vektoren ermittelt. Das Encoding kann insbesondere durch ein Feed-Forward-Netz komplettiert werden. Die somit berechneten Feature-Vektoren dienen als Objekt-Queries für die erste Schicht eines Decoders des Transformers. Die Objekt-Queries der Anker-Positionen dienen als Ausgangspunkte für die Suche nach Objekten. Allerdings ist die Suche nicht auf diese Anker-Positionen beschränkt, sondern es werden auch Objekte in einem Abstand zu diesen Anker-Positionen detektiert. Anker-Positionen entsprechen nicht Anchor-Boxen, wie sie bei anderen Detektionsansätzen verwendet werden. Die Objekt-Queries für den Transformer sind somit von Daten abhängig und nicht wie üblich eingelernt. Dies bietet vor allem bei dünn besetzen Punktwolken Vorteile, da sonst viel Rechenressourcen für das Auffinden von Positionen, die tatsächlich Daten aufweisen, verschwendet wird. Solche dünn besetzen Punktwolken kommen insbesondere bei Messungen mit LiDAR vor. Die aus den Anker-Positionen ermittelten Objekt-Queries dienen als Slots für mögliche Objekte.

Ein Decoder des Transformers ermittelt in einer ersten Schicht aus den Objekt-Queries, also den vorstehend beschriebenen Feature-Vektoren, und den Key-Vektoren und Value-Vektoren, also den eingangs beschriebenen Feature-Vektoren, Ergebnis-Feature-Vektoren, welche auch als Decoder-Ausgabe-Vektoren bezeichnet werden.

Aus den Ergebnis-Feature-Vektoren werden Box-Parameter für Bounding-Boxen, die ein Objekt beschreiben, also z. B. dessen Position bzw. Positions-Unterschiede relativ zu den Anker-Positionen, Ausmaße, Orientierung, Geschwindigkeit und/oder Klassenidentifikator mittels eines Feed-Forward-Netzes berechnet. Hierfür wird bevorzugt ein anderes Feed-Forward-Netz als das vorstehend genannte Feed-Forward-Netz zur Ermittlung der Objekt-Queries verwendet, das sich durch die Gewichtung unterscheidet.

Für die Verarbeitung zumindest einer weiteren Schicht des Transformers werden anschließend die Anker-Positionen mittels der ermittelten Box-Parameter angepasst. Bei einer Anpassung der Anker-Positionen werden die Positions-Unterschiede der Box-Parameter, die aus den Ergebnis-Feature-Vektoren der ersten Schicht des Transformers berechnet wurden, zu den ersten Anker-Positionen hinzuaddiert. Im Allgemeinen können für die Ergebnis-Feature-Vektoren der ersten Schicht Box-Parameter erhalten werden, die weit weg von der ersten Anker-Position liegen und die somit hohe Positions-Unterschiede aufweisen. Durch die Anpassung der Anker-Positionen werden angepasste Anker-Positionen erhalten, die näher am tatsächlichen Objekt liegen. Aus den angepassten Anker-Positionen wird mittels eines Encodings, wie es oben beschrieben ist, Feature-Vektoren ermittelt, die als Objekt-Queries für die zumindest eine weitere Schicht des Transformers dienen.

Um neben den angepassten Anker-Positionen auch die Informationen der hochdimensionalen Ergebnis-Feature-Vektoren der ersten Schicht zu propagieren, wird eine Transformation der Ergebnis-Feature-Vektoren der ersten Schicht bezüglich der angepassten Anker-Positionen durchgeführt. Die Ergebnis-Feature-Vektoren werden dabei an den angepassten Anker-Positionen ausgerichtet. Vorteilhafterweise wird dies durch ein Feed-Forward-Netz, das aus zwei Schichten mit einer ReLU-Aktivierung (Rectified Linear Unit) besteht, realisiert. Dies führt zu einem geringen Mehraufwand, da hier nur ein Feed-Forward-Netz mit zwei Schichten verwendet wird.

Die vorstehend beschriebenen Schritte des Anpassens der Anker-Positionen, der Ermittlung der der Feature-Vektoren aus den angepassten Anker-Positionen und der Transformation der Ergebnis-Feature-Vektoren wird hierin als Verfeinerung der Objekt-Queries bezeichnet.

Die transformierten Ergebnis-Feature-Vektoren und die berechneten Objekt-Queries, insbesondere deren Vektor-Summe, werden nun als Eingabe für zumindest eine weitere Schicht dem Decoder des Transformers zugeführt und dienen dort als Slots für mögliche Objekte. Der Decoder des Transformers ermittelt in der zumindest einen weiteren Schicht Ergebnis-Feature-Vektoren aus den transformierten Ergebnis-Feature-Vektoren, die für die vorhergehende Schicht ermittelt wurden, aus den berechneten Objekt-Queries, die wie oben beschrieben aus den angepassten Anker-Positionen ermittelt wurden, und aus den eingangs beschriebenen Key-Vektoren und Value-Vektoren.

Im Ergebnis werden die Feature-Vektoren der zumindest einen weiteren Schicht und somit auch die Bounding-Boxen und schließlich die Objekte, die in der zumindest einen weiteren Schicht ermittelt werden, abhängig von den verfeinerten Objekt-Queries der angepassten Anker-Positionen der ersten Schicht ermittelt. Die Position der verfeinerten Objekt-Queries liegt dabei üblicherweise näher an dem tatsächlichen Objekt als die Position der ursprünglichen Objekt-Queries. Es gilt, dass der Abstand zwischen der Position der Objekt-Queries, von denen aus die Erfassung durchgeführt wird, und dem tatsächlichen Objekt die Genauigkeit der Erfassung in der jeweiligen Schicht beeinflusst. Durch Anpassen der Position der verfeinerten Objekt-Queries an die vorhergehenden Box-Parameter wird der Abstand zwischen der Position der (verfeinerten) Objekt-Queries und dem tatsächlichen Objekt verringert, sodass eine genauere Erfassung realisiert wird.

Durch die Transformation der Ergebnis-Feature-Vektoren bezüglich der angepassten Anker-Positionen können diese weiterhin als Objekt-Queries für die Auswertung in nachfolgenden Schichten verwendet werden. Dabei wird die Form der Ergebnis-Feature-Vektoren nicht verändert, sodass bekannte Arten des Encodings verwendet werden können. Die Transformation kann mit geringen Mehraufwand durchgeführt werden, insbesondere, wenn hierfür ein wie oben beschriebenes Feed-Forward-Netz mit nur zwei Schichten verwendet wird. Zudem wird dasselbe Encoding der Anker-Positionen wie für die erste Schicht verwendet, sodass keine zusätzlichen Parameter verwendet werden müssen.

Darüber hinaus sind die Ergebnis-Feature-Vektoren positionsgebundene Vektoren, die bei der Verarbeitung durch den Decoder und die Anpassung an die Anker-Positionen sukzessive mehr Informationen über das Objekt erhalten. Die Objektinformationen werden im latenten Feature-Space und nicht wie herkömmlicherweise nur in den niederdimensionalen Box-Parametern kodiert. In einem weiteren Schritt können solche Vektoren dann zeitlich propagiert und beispielsweise für Objektverfolgung und Prädiktion verwendet werden. Im Ergebnis kann der Transformer für weitere nachgelagerte Anwendungen verwendet werden, welche Objekterkennung voraussetzen und die mit großen Punktwolken arbeiten.

Besonders bei der ersten Verfeinerung der Objekt-Queries wird eine starke Verringerung des Abstands erreicht, sodass eine Verfeinerung der Objekt-Queries nur zwischen der ersten und der zweiten Schicht des Transformers bereits eine große Wirkung erzielt. Vorzugsweise werden die Schritte Berechnen von Box-Parametern für die Ergebnis-Feature-Vektoren, Anpassen der Anker-Positionen, Ermitteln von Feature-Vektoren aus den angepassten Anker-Positionen mittels eines Encodings und Transformation der Ergebnis-Feature-Vektoren bezüglich der angepassten Anker-Positionen für zumindest eine weitere Schicht des Transformers außer der ersten Schicht durchgeführt, wobei in den genannten Schritten die weitere Schicht anstelle der ersten Schicht verwendet wird.

Der Begriff "erste Schicht" soll hierbei verstanden werden als die erste Schicht des Transformers, für die das Verfahren angewendet wird. Es ist zwar vorteilhaft das Verfahren direkt auf die erste Schicht des Transformers anzuwenden, dennoch ist es auch denkbar das Verfahren erst auf nachfolgende Schichten anzuwenden. In diesem Fall wird diese nachfolgende Schicht als "erste" Schicht interpretiert.

Um den Transformer bzw. das Modell des Transformers einzutrainieren, werden vorzugsweise folgende Schritte durchgeführt: Es werden mehrere Sets von Box-Parametern - vorzugsweise so viele Sets von Box-Parametern wie Objekt-Queries am Eingang des Decoders vorgesehen sind - für die Decoder-Ausgabe jeder Schicht ermittelt. Ferner werden Box-Parameter der Grundwahrheit (Ground Truth) bereitgestellt, die den nächstliegenden geschätzten Box-Parametern zugeordnet werden. Hierfür wird vorzugsweise die Ungarische Methode angewendet. Nicht passende Box-Parameter werden der "Nicht-Objekt"-Klasse zugeordnet und verworfen. Auf die Abweichung zwischen den Box-Parametern der Grundwahrheit und den zugeordneten geschätzten Box-Parametern wird eine Median-Regression, auch als $\ell_1$-loss bezeichnet, angewendet. Der Transformer wird schließlich mittels der Median-Regression trainiert.

Das Trainieren der Transformation der Ergebnis-Feature-Vektoren bezüglich der angepassten Anker-Positionen, insbesondere unter Verwendung des Feed-Forward-Netzes wie oben beschrieben, kann unabhängig vom Transformer bzw. Modell trainiert werden und anschließend mit fester Gewichtung verwendet werden. Um die Eingangsdaten für die Transformation und die Grundwahrheit zu ermitteln wird ein trainierter Transformer mit fixierten Gewichten verwendet, der wie oben beschrieben aus den Punktwolken-Daten Ergebnis-Feature-Vektoren ermittelt. Diese werden dann der Transformation zugeführt, wodurch transformierte Ergebnis-Feature-Vektoren erhalten werden. Um die Grundwahrheit zu erhalten, wird eine Schätzung der Box-Parameter sowohl auf die ermittelten Ergebnis-Feature-Vektoren als auch auf die transformierten Ergebnis-Feature-Vektoren angewendet. Dabei sollen alle Box-Parameter außer den Positions-Unterschieden unverändert bleiben. Schließlich werden die transformierten Ergebnis-Feature-Vektoren angepasst, bis die Positions-Unterschiede der Box-Parameter relativ zur neuen Anker-Position nach der Transformation Null ergeben und diese somit aufeinander liegen.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Zur Implementierung ist das Computerprogramm auf dem maschinenlesbaren Speichermedium gespeichert.

Durch Aufspielen des Computerprogramms auf ein herkömmliches elektronisches Steuergerät, wird das elektronische Steuergerät erhalten, welches eingerichtet ist, eine Detektion von mehreren Objekten aus Punktwolken-Daten durchzuführen.

Kurze Beschreibung der Zeichnungen

Ausführungsbeispiele der Erfindung sind in den Zeichnungen dargestellt und in der nachfolgenden Beschreibung näher erläutert.

Figur 1 zeigt eine Visualisierung aus der Vogelperspektive der Ermittlung der Bounding-Boxen gemäß dem Stand der Technik (Figur 1 a) und gemäß einer Ausführungsform des erfindungsgemäßen Verfahrens (Figur 1 b).

Figur 2 zeigt ein Ablaufdiagramm einer Ausführungsform des erfindungsgemäßen Verfahrens.

Figur 3 zeigt ein Ablaufdiagramm einer Transformation der Ergebnis-Feature-Vektoren bezüglich der angepassten Anker-Positionen gemäß dem erfindungsgemäßen Verfahren.

Ausführungsbeispiele der Erfindung

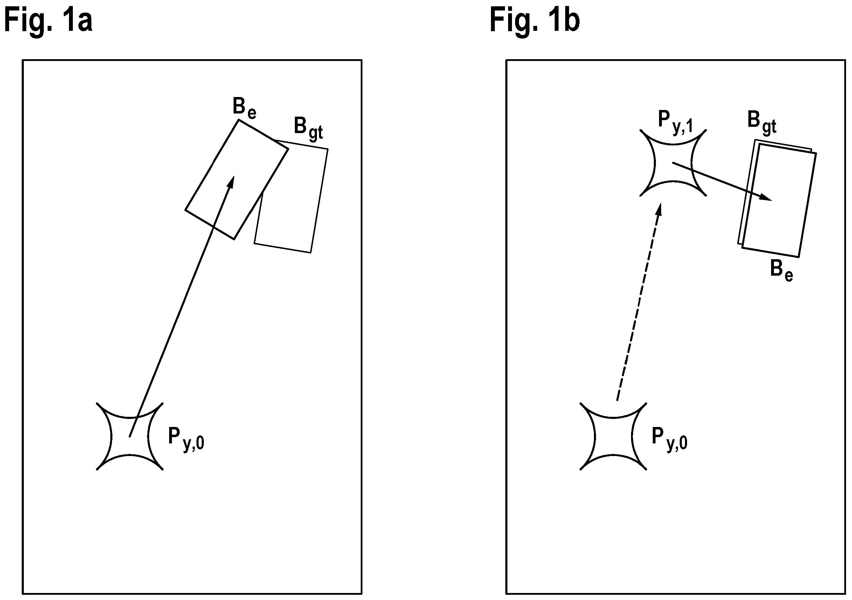

Figur 1 zeigt aus der Vogelperspektive jeweils eine Bounding-Box $B_{gt}$ gemäß der Grundwahrheit (Ground Truth) und eine geschätzte Bounding-Box $B_e$, die durch ein Verfahren zur Objektdetektion mittels eines Transformers ermittelt wurde, sowie die Positionen $P_{y,0}$, $P_{y,1}$ des Objekt-Querys, von denen aus die Ermittlung jeweils stattfindet. In Figur 1 a wird die geschätzte Bounding-Box $B_e$ immer ausgehend von derselben Position $P_{y,0}$ des Objekt-Querys ermittelt. Aufgrund des Abstands zwischen der Position $P_{y,0}$ des Objekt-Querys und der Position des Objekts, also der Position, an der die Bounding-Box $B_{gt}$ gemäß der Grundwahrheit angeordnet ist, kommt es bei der Ermittlung im Decoder des Transformers zu Ungenauigkeiten, sodass die geschätzte Bounding-Box $B_e$ und die Bounding-Box $B_{gt}$ gemäß der Grundwahrheit deutlich auseinander liegen. Figur 1 b zeigt das Resultat des erfindungsgemäßen Verfahrens. Die Ermittlung der geschätzten Bounding-Box $B_e$ in einer ersten Schicht des Transformers erfolgt wie in Figur 1 a ausgehend von der ursprünglichen Position $P_{y,0}$ des Objekt-Querys und ist in Figur 1 b nicht dargestellt. Wie nachfolgend beschrieben, wird anschließend eine Verfeinerung der Objekt-Queries durchgeführt und diese an neue Anker-Positionen, die von der in der ersten Schicht ermittelten Bounding-Box $B_e$ abhängen, angepasst. Die Ermittlung der hier dargestellten Bounding-Box $B_e$ in der zweiten Schicht des Transformers erfolgt ausgehend von einer neuen Position $P_{y,1}$ des verfeinerten Objekt-Querys. Diese neue Position $P_{y,1}$ des verfeinerten Objekt-Querys liegt näher am tatsächlichen Objekt, also der Position, an der die Bounding-Box $B_{gt}$ gemäß der Grundwahrheit angeordnet ist, sodass die geschätzte Bounding-Box $B_e$ besser bestimmt werden kann und somit das Objekt genauer detektiert werden kann.

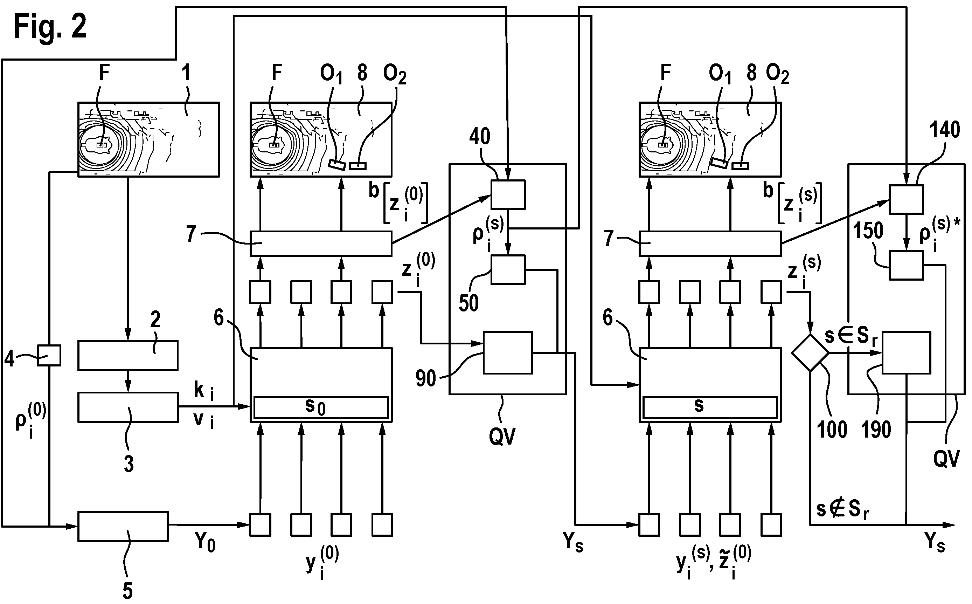

Figur 2 zeigt ein Ablaufdiagramm des erfindungsgemäßen Verfahrens für zwei Schichten des Transformers. Gleiche Schritte werden mit gleichen Bezugszeichen bezeichnet und nur einmal im Detail beschrieben. Nachfolgend bezeichnet s die Nummer der Schicht des Decoders des Transformers. i wird als Laufvariable der Feature-Vektoren verwendet, wobei M Feature-Vektoren vorgesehen sind.

Zu Beginn erfasst ein LiDAR-Sensor eines Fahrzeugs F die Umgebung. Eine visuelle Darstellung dieser aufgenommenen Punktwolken-Daten ist mit 1 bezeichnet. Aus den Punktwolken-Daten berechnet ein Backbone 2 Feature-Vektoren, welche dann durch ein Positions-Encoding 3 mittels Sinus und Cosinus augmentiert werden und schließlich als Key-Vektoren $k_i$ und Value-Vektoren $v_i$ einem Decoder 6 eines Transformers zugeführt werden.

Gleichzeitig werden aus den Punktwolken-Daten durch eine Sampling-Methode 4, beispielsweise Farthest-Point-Sampling, erste Anker-Positionen $\rho_i^{(0)}$ ermittelt, die dann ein Fourier-Encoding 5 durchlaufen:

$$y_i^{(0)} = \text{FFN}\left[\sin\left(B\rho_i^{(0)}\right), \cos\left(B\rho_i^{(0)}\right)\right]$$

$B$ ist dabei eine Matrix, die Einträge der Normalverteilung aufweist, FFN stellt ein Feed-Forward-Netz dar, welches hier aus zwei Schichten mit einer ReLU-Aktivierung (Rectified Linear Unit) besteht. $y_i^{(0)}$ sind die berechneten Feature-Vektoren, welche als Objekt-Queries dem Decoder 6 des Transformers zugeführt werden.

Ein erstes Set von Feature-Vektoren, welches direkt aus den ersten Anker-Positionen $\rho_i^{(0)}$ ermittelt wurde, ist mit $Y_0$ bezeichnet und besteht aus den Objekt-Queries $y_i^{(0)}$. Jedes Objekt-Query $y_i^{(0)}$ dient als Slot (in Figur 2 dargestellt durch einzelne Kästchen) für ein mögliches Objekt. Der Decoder 6 des Transformers besteht aus sechs Schichten s mit jeweils acht Attention-Heads. In der ersten Schicht $s_0$ (s=0) ermittelt der Decoder 6 aus den Objekt-Queries $y_i^{(0)}$ sowie den Key-Vektoren $k_i$ und den Value-Vektoren $v_i$ Ergebnis-Feature-Vektoren $z_i^{(0)}$. Die Dimension der Objekt-Queries $y_i^{(0)}$, der Key-Vektoren $k_i$ und der Value-Vektoren $v_i$ beträgt beispielsweise 256.

Hierdurch werden zwei Objekte $O_1$ und $O_2$ detektiert. Ein Feed-Forward-Netz 7 berechnet aus den Ergebnis-Feature-Vektoren $z_i^{(0)}$ der ersten Schicht $s_0$ Box-Parameter $b_{\left[z_i^{(0)}\right]} = (\Delta x, \Delta y, \Delta z, w, l, h, \gamma, v_x, v_y, \text{cls})$ für die Objekte $O_1$, $O_2$, wobei $\Delta x$, $\Delta y$, $\Delta z$ den Unterschied der Position zu den Anker-Positionen $\rho_i^{(0)}$ in drei Dimensionen repräsentiert, $w$, $l$, $h$ die Ausmaße des Objekts $O_1$, $O_2$ in drei Dimensionen sind, $\gamma$ die Ausrichtung des Objekts $O_1$, $O_2$ ist, $v_x$, $v_y$ die Geschwindigkeit des Objekts $O_1$, $O_2$ in der horizontalen Ebene repräsentiert und cls einen Klassenidentifikator darstellt. Die Objekte $O_1$, $O_2$ wurden detektiert und sind hier in der mit 8 bezeichneten visuellen Darstellung eingezeichnet.

Erfindungsgemäß wird eine Verfeinerung VQ der Objekt-Queries durchgeführt. Hierfür erfolgt einerseits eine Anpassung 40 der Anker-Positionen $\rho_i^{(0)}$ um angepasste Anker-Positionen $\rho_i^{(s)}$ für die weitere Schicht s des Decoders 6 zu erhalten. Die Positions-Unterschiede $\Delta x$, $\Delta y$, $\Delta z$ der Box-Parameter $b_{\left[z_i^{(0)}\right]}$, die in der ersten Schicht $s_0$ des Decoders 6 ermittelt wurden, werden zu den ersten Anker-Positionen $\rho_i^{(0)}$ addiert und somit angepasste Anker-Positionen $\rho_i^{(s)}$ erhalten:

$$\rho_i^{(s)} = (\Delta x, \Delta y, \Delta z) + \rho_i^{(0)}$$

Aus den Ergebnis-Feature-Vektoren $z_i^{(0)}$ können Box-Parameter $b_{\left[z_i^{(0)}\right]}$ erhalten werden, die weit weg von der ersten Anker-Position $\rho_i^{(0)}$ liegen und somit hohe Positions-Unterschiede $\Delta x$, $\Delta y$, $\Delta z$ aufweisen. Durch die Anpassung 40 der Anker-Position werden angepasste Anker-Positionen $\rho_i^{(s)}$ erhalten, die näher am Objekt liegen.

**EP 4 595 019 B1**

Ausgehend von diesen angepassten Anker-Positionen $\boldsymbol{\rho}_i^{(s)}$ wird wiederum ein Encoding 50 durchgeführt, welches dem obenstehenden Encoding 5 entspricht, auf das verwiesen wird. Dadurch werden Feature-Vektorenerhalten, welche als Objekt-Queries $\boldsymbol{y}_i^{(s)}$ einer weiteren Schicht s des Decoder 6 des Transformers zugeführt werden.

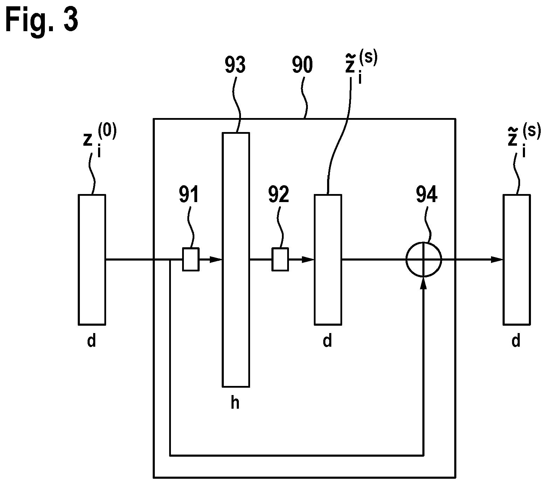

Andererseits wird mittels eines Anker-Ausrichtungs-Moduls AAM (anchor alignment module) eine Transformation 90 der Ergebnis-Feature-Vektoren $\boldsymbol{z}_i^{(0)}$ der ersten Schicht $s_0$ durchgeführt, die mit Bezug auf Figur 3 näher beschrieben wird. Dabei werden transformierte Ergebnis-Feature-Vektoren $\tilde{\boldsymbol{z}}_i^{(0)}$ erhalten, die an den angepassten Anker-Positionen $\boldsymbol{\rho}_i^{(s)}$ ausgerichtet sind.

$$\tilde{\boldsymbol{z}}_i^{(0)} = \mathrm{AAM}(\boldsymbol{z}_i^{(0)})$$

Die transformierten Ergebnis-Feature-Vektoren $\tilde{\boldsymbol{z}}_i^{(0)}$ und die oben genannten Feature-Vektoren $\boldsymbol{y}_i^{(s)}$, die mittels Encoding 50 ermittelt wurden, werden als Set von Feature-Vektoren, das als $\mathbf{Y}_s$ bezeichnet ist, der weiteren Schicht s des Decoders zugeführt.

$$\boldsymbol{Y}_s = \{\tilde{\boldsymbol{z}}_i^{(0)} + \boldsymbol{y}_i^{(s)}\}_{i=1}^M$$

Jeweils die Summe aus jedem Objekt-Query $\boldsymbol{y}_i^{(s)}$ und jedem transformierten Ergebnis-Feature-Vektor $\tilde{\boldsymbol{z}}_i^{(0)}$ dient als Slot (in Figur 2 dargestellt durch einzelne Kästchen) für ein mögliches Objekt. Somit werden insgesamt M Slots erhalten. Der Decoder 6 ermittelt in einer weiteren Schicht s, wie oben beschrieben, aus den Objekt-Queries $\boldsymbol{y}_i^{(s)}$ der aktuellen Schicht s, die abhängig von den angepassten Anker-Positionen $\boldsymbol{\rho}_i^{(s)}$ ermittelt wurde, den transformierte Ergebnis-Feature-Vektoren $\tilde{\boldsymbol{z}}_i^{(0)}$ der vorhergehenden Schicht $s_0$ sowie den Key-Vektoren $\boldsymbol{k}_i$ und den Value-Vektoren $\boldsymbol{v}_i$ Ergebnis-Feature-Vektoren $\boldsymbol{z}_i^{(s)}$. Die Ergebnis-Feature-Vektoren $\boldsymbol{z}_i^{(s)}$ werden dann ebenfalls einem Fast-Forward-Netz 7 zugeführt, das die Box-Parameter $\boldsymbol{b}_{\left[\boldsymbol{z}_i^{(s)}\right]} = (\Delta x, \Delta y, \Delta z, w, l, h, \gamma, v_x, v_y, \mathrm{cls})$ für die Objekte $O_1$, $O_2$ berechnet. Dabei sind die hier ermittelten Positions-Unterschiede $\Delta x$, $\Delta y$, $\Delta z$ aufgrund der Verfeinerung VQ der Objekt-Queries klein.

In Figur 2 ist eine weitere Verfeinerung QV der Objekt-Queries für noch weitere Schichten dargestellt. In einer Abfrage 100 wird entschieden, ob eine weitere Verfeinerung QV durchgeführt werden soll, wodurch eine weitere Verbesserung der Genauigkeit der Detektion in den weiteren Schichten erreicht werden kann. $S_r$ bezeichnet hierbei die Schichten, bei denen die Verfeinerung QV durchgeführt werden soll. Für den Fall $s \notin S_r$ werden die Ergebnis-Feature-Vektoren $\boldsymbol{z}_i^{(s)}$ der aktuellen Schicht s als Objekt-Queries für eine nachfolgende (hier nicht dargestellte) Schicht verwendet.

Für den Fall $s \in S_r$ wird eine entsprechende Verfeinerung QV der Objekt-Queries durchgeführt. Wie oben beschrieben, erfolgt einerseits eine Anpassung 140 der Anker-Positionen $\boldsymbol{\rho}_i^{(s)}$, um angepasste Anker-Positionen $\boldsymbol{\rho}_i^{(s)*}$ zu erhalten, indem die Positions-Unterschiede $\Delta x$, $\Delta y$, $\Delta z$ der Box-Parameter $\boldsymbol{b}_{\left[\boldsymbol{z}_i^{(s)}\right]}$, die in der aktuellen Schicht s des Decoders 6 ermittelt wurden, zu den Anker-Positionen $\boldsymbol{\rho}_i^{(s)}$ addiert werden. Ausgehend von diesen angepassten Anker-Positionen $\boldsymbol{\rho}_i^{(s)*}$ wird wiederum ein Encoding 150 durchgeführt, welches den obenstehenden Encodings 5 bzw. 50 entspricht, auf die verwiesen wird, wodurch Feature-Vektoren $\boldsymbol{y}_i^{(s)}$ erhalten werden. Andererseits wird mittels eines Anker-Ausrichtungs-Moduls AAM (anchor alignment module) eine Transformation 190 der Ergebnis-Feature-Vektoren $\boldsymbol{z}_i^{(s)}$ durchgeführt, welche der obenstehenden Transformation 90 entspricht, auf die auch mit Bezug auf Figur 3 verwiesen wird, wodurch transformierte Ergebnis-Feature-Vektoren $\tilde{z}_i^{(s)}$ erhalten werden.

Allgemein kann das Set von Feature-Vektoren $\mathbf{Y}_s$, welches einer Schicht s des Decoder 6 zugeführt wird, abhängig von der Nummer der Schicht und abhängig davon, ob für diese eine Verfeinerung QV der Objekt-Queries durchgeführt wird, wie folgt aufgestellt werden:

$$
\mathbf{Y}_s = \begin{cases}
\{\tilde{z}_i^{(s-1)} + \mathbf{y}_i^{(s)}\}_{i=1}^M & \text{für } s \in S_r \\
\{z_i^{(s-1)} + \mathbf{y}_i^{(j)}\}_{i=1}^M & \text{für } s \notin S_r \text{ und } s \neq 0 \\
\{\mathbf{y}_i^{(0)}\}_{i=1}^M & \text{für } s = 0
\end{cases}
$$

Dabei ist $j = \max\{l\ |l < s \wedge l \in S_r\}$, was bedeutet, dass im zweiten Fall (zweite Zeile) stets die aktuellen durch Encoding 5, 50, 150 erhaltenen Objekt-Queries $\mathbf{y}_i^{(j)}$ dem Decoder 6 zugeführt werden. Die letzte Zeile gibt den Fall für die erste Schicht $s_0$ an.

Figur 3 zeigt ein Ablaufdiagramm der Transformation 90. Die Ergebnis-Feature-Vektoren $z_i^{(0)}$ werden einem Fast-Forward-Netz zugeführt, welches aus zwei Schichten 91, 92 mit ReLU-Aktivierung besteht. Das Fast-Forward-Netz wird so eintrainiert, dass die beiden Schichten 91, 92 die Ergebnis-Feature-Vektoren $z_i^{(0)}$ so verändern, dass die Positions-Unterschiede $\Delta x$, $\Delta y$, $\Delta z$ zu der vorherigen Anker-Position zu Null gesetzt werden. Die Schichten 91, 92 selbst sind Umformungen der Eingabe mit Hilfe von gelernten Gewichten. Nach der ersten Schicht 91 wird eine Zwischenrepräsentation mit der Dimension h erhalten. Nach der zweiten Schicht 92 werden die transformierten Ergebnis-Feature-Vektor $\tilde{z}_i^{(0)}$ erhalten, welche dieselbe Dimension d aufweisen, wie die eingegangenen Ergebnis-Feature-Vektoren $z_i^{(0)}$. Zudem wird eine Umgehungsverbindung 94 zum ursprünglichen Ergebnis-Feature-Vektoren $z_i^{(0)}$ hergestellt, um sicherzugehen, dass keine Informationen verloren gegangen sind. Die vorstehende Beschreibung kann auch auf Transformationen für die weiteren Schichten s übertragen werden, beispielsweise auf die Transformation 190.

**Patentansprüche**

1. Verfahren zur Detektion von mehreren Objekten ($O_1$, $O_2$) aus Punktwolken-Daten mittels eines Transformers mit Attention-Modell, wobei der Zustand der verfolgten Objekte ($O_1$, $O_2$) innerhalb des Modells im Feature-Space gespeichert ist, mit folgenden Schritten:

- Berechnen von Feature-Vektoren aus den Punktwolken-Daten durch ein Backbone (2), wobei die Feature-Vektoren als Key-Vektoren ($\mathbf{k}_i$) und Value-Vektoren ($\mathbf{v}_i$) für den Transformer dienen;

- Berechnen von ersten Anker-Positionen ($\boldsymbol{\rho}_i^{(0)}$) für eine erste Schicht ($s_0$) des Transformers aus den Punktwolken-Daten durch eine Sampling-Methode (4);

- Ermitteln von Feature-Vektoren aus den ersten Anker-Positionen ($\boldsymbol{\rho}_i^{(0)}$) mittels eines Encodings (5), wobei die Feature-Vektoren als Objekt-Queries ($\mathbf{y}_i^{(0)}$) für die erste Schicht ($s_0$) des Transformers dienen;

- Ermitteln von Ergebnis-Feature-Vektoren ($z_i^{(0)}$) in der ersten Schicht ($s_0$) des Transformers aus den Objekt-Queries ($\mathbf{y}_i^{(0)}$) und den Key-Vektoren ($\mathbf{k}_i$) und Value-Vektoren ($\mathbf{v}_i$) mittels der ersten Schicht ($s_0$) eines Decoders (6) des Transformers;

- Berechnen (7) von Box-Parametern ($\mathbf{b}_{[z_i^{(0)}]}$) für die Ergebnis-Feature-Vektoren ($z_i^{(0)}$) der ersten Schicht ($s_0$) des Transformers;
**gekennzeichnet durch**

- Anpassen (40, 140) der Anker-Positionen ($\boldsymbol{\rho}_i^{(s)}$) für zumindest eine weitere Schicht (s) des Transformers, indem die Positions-Unterschiede der Box-Parameter ($\mathbf{b}_{[z_i^{(0)}]}$) zu den ersten Anker-Positionen ($\boldsymbol{\rho}_i^{(0)}$) addiert

werden;

- Ermitteln von Feature-Vektoren aus den angepassten Anker-Positionen ( $\rho_i^{(s)}$ ) mittels eines Encodings (50, 150), wobei die Feature-Vektoren als Objekt-Queries ( $y_i^{(s)}$ ) für die zumindest eine weitere Schicht (s) des Transformers dienen;

- Transformation (90) der Ergebnis-Feature-Vektoren ( $z_i^{(0)}$ ) der ersten Schicht bezüglich der angepassten Anker-Positionen ( $\rho_i^{(l)}$ ), wobei die transformierten Ergebnis-Feature-Vektoren ( $\tilde{z}_i^{(0)}$ ) als Objekt-Queries für die zumindest eine weitere Schicht (s) des Transformers dienen;

- Ermitteln von Ergebnis-Feature-Vektoren ( $z_i^{(s)}$ ) in der zumindest einen weiteren Schicht (s) des Transformators aus den transformierten Ergebnis-Feature-Vektoren ( $\tilde{z}_i^{(0)}$ ) der vorherigen Schicht ($s_0$), den berechneten Objekt-Queries $y_i^{(s)}$ der aktuellen Schicht (s) und den Key-Vektoren ($k_i$) und Value-Vektoren ($v_i$) mittels des Decoders (60) des Transformers.

2. Verfahren nach Anspruch 1, **dadurch gekennzeichnet, dass** die Schritte Berechnen von Box-Parametern ( $b_{[z_i^{(s)}]}$ ) für die Ergebnis-Feature-Vektoren, Anpassen (140) der Anker-Positionen ( $\rho_i^{(s)}$ ), Ermitteln von Feature-Vektoren ( $y_i^{(s)}$ ) aus den angepassten Anker-Positionen ( $\rho_i^{(s)*}$ ) mittels eines Encodings (150) und Transformation (190) der Ergebnis-Feature-Vektoren ( $z_i^{(s)}$ ) bezüglich der angepassten Anker-Positionen ( $\rho_i^{(s)*}$ ) für zumindest eine weitere Schicht (s) durchgeführt wird.

3. Verfahren nach einem der Ansprüche 1 oder 2, **dadurch gekennzeichnet, dass** zum Trainieren des Transformers folgende Schritte durchgeführt werden:

   - Schätzen von mehreren Sets von Box-Parametern für die Decoder-Ausgabe jeder Schicht;
   - Zuordnen von Box-Parametern der Grundwahrheit zu den nächstliegenden geschätzten Box-Parametern
   - Anwenden einer Median-Regression auf die Abweichung zwischen den Box-Parametern der Grundwahrheit und den zugeordneten geschätzten Box-Parametern;
   - Trainieren des Transformers mittels der Median-Regression.

4. Verfahren nach einem der vorhergehenden Ansprüche, **dadurch gekennzeichnet, dass** die Transformation (90, 190) der Ergebnis-Feature-Vektoren ( $z_i^{(0)}, z_i^{(s)}$ ) bezüglich der angepassten Anker-Positionen ( $\rho_i^{(s)}, \rho_i^{(s)*}$ ) durch ein Feed-Forward-Netz, bestehend aus zwei Schichten (91, 92) mit einer ReLU-Aktivierung, realisiert wird.

5. Verfahren nach Anspruch 4, **dadurch gekennzeichnet, dass** das zum Trainieren der Transformation (90, 190) der Ergebnis-Feature-Vektoren ( $z_i^{(0)}, z_i^{(s)}$ ) bezüglich der angepassten Anker-Positionen ( $\rho_i^{(s)}, \rho_i^{(s)*}$ ) folgende Schritte ausgeführt werden:

   - Berechnen von Ergebnis-Feature-Vektoren aus den Punktwolken-Daten;
   - Transformieren der Ergebnis-Feature-Vektoren;
   - Anwenden einer Schätzung der Box-Parameter für die Ergebnis-Feature-Vektoren und der transformierten Ergebnis-Feature-Vektoren;
   - Anpassen der transformierten Ergebnis-Feature-Vektoren bis deren Positions-Unterschiede der Box-Parameter Null ergeben.

6. Verfahren nach einem der vorherigen Ansprüche, **dadurch gekennzeichnet, dass** die Punktwolken-Daten durch LiDAR erfasst wurden.

7. Verfahren nach einem der vorherigen Ansprüche, **dadurch gekennzeichnet, dass** die Punktwolken-Daten aus einem Fahrzeug (F) aufgenommen wurden.

8. Computerprogramm, welches eingerichtet ist, jeden Schritt des Verfahrens nach einem der Ansprüche 1 bis 7 durchzuführen.

9. Maschinenlesbares Speichermedium, auf welchem ein Computerprogramm nach Anspruch 8 gespeichert ist.

10. Elektronisches Steuergerät, welches eingerichtet ist, um mittels eines Verfahrens nach einem der Ansprüche 1 bis 7 eine Detektion von mehreren Objekten aus Punktwolken-Daten mittels eines Transformers mit Attention-Modell durchzuführen.

**Claims**

1. Method for detecting multiple objects ($O_1$, $O_2$) from point cloud data by means of a transformer with an attention model, wherein the state of the tracked objects ($O_1$, $O_2$) is stored within the model in the feature space, comprising the following steps:

   - calculating feature vectors from the point cloud data by means of a backbone (2), wherein the feature vectors serve as key vectors ($k_i$) and value vectors ($v_i$) for the transformer;

   - calculating first anchor positions ($\rho_i^{(0)}$) for a first layer ($s_0$) of the transformer from the point cloud data by means of a sampling method (4);

   - determining feature vectors from the first anchor positions ($'\rho_i^{(0)'}$) by means of an encoding (5), wherein the feature vectors serve as object queries ($'y_i^{(0)}$) for the first layer ($s_0$) of the transformer;

   - determining result feature vectors ($z_i^{(0)}$) in the first layer ($s_0$) of the transformer from the object queries ($'y_i^{(0)}$) and the key vectors ($k_i$) and value vectors ($v_i$) by means of the first layer ($s_0$) of a decoder (6) of the transformer;

   - calculating (7) box parameters ($b_{[z_i^{(0)}]}$) for the result feature vectors ($'z_i^{(0)}$) of the first layer ($s_0$) of the transformer; **characterized by**

   - adapting (40, 140) the anchor positions ($\rho_i^{(s)'}$) for at least one further layer (s) of the transformer by adding the position differences of the box parameters ($b_{[z_i^{(0)}]}$) to the first anchor positions ($'\rho_i^{(0)}$);

   - determining feature vectors from the adapted anchor positions ($'\rho_i^{(s)}$) by means of an encoding (50, 150), wherein the feature vectors serve as object queries ($y_i^{(s)}$) for the at least one further layer (s) of the transformer;

   - transformation (90) of the result feature vectors ($z_i^{(0)'}$) of the first layer with respect to the adapted anchor positions ($'\rho_i^{(l)}$), wherein the transformed result feature vectors ($\tilde{z}_i^{(0)'}$) serve as object queries for the at least one further layer (s) of the transformer;

   - determining result feature vectors ($'z_i^{(s)'}$) in the at least one further layer (s) of the transformer from the transformed result feature vectors ($\tilde{z}_i^{(0)}$) of the previous layer ($s_0$), the calculated object queries $y_i^{(s)}$ of the current layer (s) and the key vectors ($k_i$) and value vectors ($v_i$) by means of the decoder (60) of the transformer.

2. Method according to Claim 1, **characterized in that** the steps of calculating box parameters ($b_{[z_i^{(s)}]'}$) for the result feature vectors, adapting (140) the anchor positions ($'\rho_i^{(s)'}$), determining feature vectors ($y_i^{(s)}$) from the adapted anchor positions ($'\rho_i^{(s)*}$) by means of an encoding (150) and transformation (190) of the result feature vectors ($'z_i^{(s)}$) with respect to the adapted anchor positions ($\rho_i^{(s)*}$) are carried out for at least one further layer (s).

3. Method according to either of Claims 1 and 2, **characterized in that** the following steps are carried out for training the transformer:

- estimating multiple sets of box parameters for the decoder output of each layer;
- assigning box parameters of the ground truth to the nearest estimated box parameters
- applying a median regression to the deviation between the box parameters of the ground truth and the assigned estimated box parameters;
- training the transformer by means of the median regression.

4. Method according to any of the preceding claims, **characterized in that** the transformation (90, 190) of the result feature vectors ( $z_i^{(0)}$, $z_i^{(s)}$ ) with respect to the adapted anchor positions ( $\rho_i^{(s)}$, $\rho_i^{(s)*}$ ) is realized by a feedforward network, consisting of two layers (91, 92) with a ReLU activation.

5. Method according to Claim 4, **characterized in that** the following steps are performed for training the transformation (90, 190) of the result feature vectors ( $z_i^{(0)}$, $z_i^{(s)}$ ) with respect to the adapted anchor positions ( $\rho_i^{(s)}$, $\rho_i^{(s)*}$ ):

- calculating result feature vectors from the point cloud data;
- transforming the result feature vectors;
- applying an estimation of the box parameters for the result feature vectors and the transformed result feature vectors;
- adapting the transformed result feature vectors until their position differences of the box parameters amount to zero.

6. Method according to any of the preceding claims, **characterized in that** the point cloud data were acquired by LiDAR.

7. Method according to any of the preceding claims, **characterized in that** the point cloud data were recorded from a vehicle (F).

8. Computer program which is configured to carry out each step of the method according to any of Claims 1 to 7.

9. Machine-readable storage medium on which a computer program according to Claim 8 is stored.

10. Electronic control unit which is configured to carry out a detection of multiple objects from point cloud data by means of a transformer with an attention model by means of a method according to any of Claims 1 to 7.

**Revendications**

1. Procédé de détection d'objets multiples ($O_1$, $O_2$) à partir de données de nuage de points au moyen d'un transformateur comportant un modèle d'attention, l'état des objets suivis ($O_1$, $O_2$) étant stocké au sein du modèle dans l'espace des caractéristiques, comprenant les étapes suivantes :

- calculer des vecteurs de caractéristiques à partir des données du nuage de points au moyen d'un squelette (2), lesdits vecteurs de caractéristiques étant utilisés en tant que vecteurs clés ($k_i$) et vecteurs de valeurs ($v_i$) pour le transformateur ;

- calculer des premières positions d'ancrage ( $\rho_i^{(0)}$ ) pour une première couche ($s_0$) du transformateur à partir des données de nuage de points à l'aide d'une méthode d'échantillonnage (4) ;

- déterminer des vecteurs de caractéristiques à partir des premières positions d'ancrage ( $\rho_i^{(0)}$ ) au moyen d'un codage (5), lesdits vecteurs de caractéristiques étant utilisés en tant que requêtes d'objet ( $y_i^{(0)}$ ) pour la première couche ($s_0$) du transformateur ;

- déterminer des vecteurs de caractéristiques de résultat ( $z_i^{(0)}$ ) dans la première couche ($s_0$) du transformateur à partir des requêtes d'objet ( $y_i^{(0)}$ ) et des vecteurs clés ($k_i$) et des vecteurs de valeurs ($v_i$) à l'aide de la première

couche ($s_0$) d'un décodeur (6) du transformateur ;

- calculer (7) des paramètres de boîte ( $b_{[z_i^{(0)}]}$ ) pour les vecteurs de caractéristiques de résultat ( $z_i^{(0)}$ ) de la première couche ($s_0$) du transformateur ; **caractérisé par** les étapes suivantes

- adapter (40, 140) les positions d'ancrage ( $\rho_i^{(s)}$ ) pour au moins une couche supplémentaire (s) du transformateur, en ajoutant les différences de position des paramètres de boîte ( $b_{[z_i^{(0)}]}$ ) aux premières positions d'ancrage ( $\rho_i^{(0)}$ ) ;

- déterminer des vecteurs de caractéristiques à partir des positions d'ancrage adaptées ( $\rho_i^{(s)}$ ) au moyen d'un codage (50, 150), lesdits vecteurs de caractéristiques étant utilisés en tant que requêtes d'objet ( $y_i^{(s)}$ ) pour l'au moins une couche supplémentaire (s) du transformateur ;

- transformer (90) les vecteurs de caractéristiques de résultat ( $z_i^{(0)}$ ) de la première couche par rapport aux positions d'ancrage adaptées ( $\rho_i^{(l)}$ ), les vecteurs de caractéristiques de résultat transformés ( $\tilde{z}_i^{(0)}$ ) étant utilisés en tant que requêtes d'objet pour l'au moins une couche supplémentaire (s) du transformateur ;

- déterminer des vecteurs de caractéristiques de résultat ( $z_i^{(s)}$ ) dans l'au moins une couche supplémentaire (s) du transformateur à partir des vecteurs de caractéristiques de résultat transformés ( $\tilde{z}_i^{(0)}$ ) de la couche précédente ($s_0$), des requêtes d'objet calculées $y_i^{(s)}$ de la couche courante (s) et des vecteurs clés ($k_i$) et des vecteurs de valeurs ($v_i$) au moyen du décodeur (60) du transformateur.

2. Procédé selon la revendication 1, **caractérisé en ce que** les étapes consistant à calculer des paramètres de boîte ( $b_{[z_i^{(s)}]}$ ) pour les vecteurs de caractéristiques de résultat, adapter (140) les positions d'ancrage ( $\rho_i^{(s)}$ ), déterminer des vecteurs de caractéristiques ( $y_i^{(s)}$ ) à partir des positions d'ancrage adaptées ( $\rho_i^{(s)*}$ ) au moyen d'un codage (150) et d'une transformation (190) des vecteurs de caractéristiques de résultat ( $z_i^{(s)}$ ) par rapport aux positions d'ancrage adaptées ( $\rho_i^{(s)*}$ ) sont exécutées pour au moins une couche (s) supplémentaire.

3. Procédé selon l'une des revendications 1 ou 2, **caractérisé en ce que** les étapes suivantes sont exécutées pour l'entraînement du transformateur :

   - estimer plusieurs ensembles de paramètres de boîte pour la sortie de décodeur de chaque couche ;
   - associer des paramètres de boîte de la vérité de base aux paramètres de boîte estimés les plus proches ;
   - appliquer une régression de médiane à l'écart entre les paramètres de boîte de la vérité de base et les paramètres de boîte estimés associés ;
   - entraîner le transformateur par régression de médiane.

4. Procédé selon l'une des revendications précédentes, **caractérisé en ce que** la transformation (90, 190) des vecteurs de caractéristiques de résultat ( $z_i^{(0)}$ , $z_i^{(s)}$ ) par rapport aux positions d'ancrage adaptées ( $\rho_i^{(s)}$ , $\rho_i^{(s)*}$ ) est réalisée à l'aide d'un réseau à action anticipée composé de deux couches (91, 92) à l'aide d'une activation ReLU.

5. Procédé selon la revendication 4, **caractérisé en ce que** les étapes suivantes sont exécutées pour l'entraînement de la transformation (90, 190) des vecteurs de caractéristiques de résultat ( $z_i^{(0)}$ , $z_i^{(s)}$ ) par rapport aux positions d'ancrage adaptées ( $\rho_i^{(s)}$ , $\rho_i^{(s)*}$ ):

   - calculer des vecteurs de caractéristiques de résultat à partir des données de nuage de points ;
   - transformer les vecteurs de caractéristiques de résultat ;

- appliquer une estimation des paramètres de boîte pour les vecteurs de caractéristiques de résultat et les vecteurs de caractéristiques de résultat transformés ;
- adapter les vecteurs de caractéristiques de résultat transformés jusqu'à ce que leurs différences de position conduisent à des paramètres de boîte nuls.

6. Procédé selon l'une des revendications précédentes, **caractérisé en ce que** les données de nuage de points ont été détectées par LiDAR.

7. Procédé selon l'une des revendications précédentes, **caractérisé en ce que** les données de nuage de points ont été acquises à partir d'un véhicule (F).

8. Programme informatique conçu pour mettre en œuvre chaque étape du procédé selon l'une des revendications 1 à 7.

9. Support de stockage lisible par machine sur lequel est stocké un programme informatique selon la revendication 8.

10. Appareil de commande électronique conçu pour effectuer, au moyen d'un procédé selon l'une des revendications 1 à 7, la détection d'objets multiples à partir de données de nuage de points au moyen d'un transformateur comportant un modèle d'attention.

Fig. 1b

Fig. 1a

Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PAPER ASHISH VASWANI et al.** Attention is all you need. *arXiv preprint arXiv:1706.03762*, 2017

- Real-time 3D Single Object Tracking with Transformer. **JIAYAO SHAN et al.** ARXIV.ORG. CORNELL UNIVERSITY LIBRARY, 02 September 2022